Europäisches Patentamt

European Patent Office

Office européen des brevets

(11) Publication number: **0 328 800**
**A1**

## (12) EUROPEAN PATENT APPLICATION

(21) Application number: 88301229.6

(22) Date of filing: 15.02.88

(51) Int. Cl.4: **F04D 29/10 , F04D 7/04**

(43) Date of publication of application:
**23.08.89 Bulletin 89/34**

(84) Designated Contracting States:
**DE FR GB IT SE**

(71) Applicant: **Dunford, Joseph Reginald**
**88 Ridge Avenue P.O. Box 538**
**Waverley Nova Scotia, BON 2SO(CA)**

(72) Inventor: **Dunford, Joseph Reginald**
**88 Ridge Avenue P.O. Box 538**
**Waverley Nova Scotia, BON 2SO(CA)**

(74) Representative: **Skone James, Robert Edmund**
**et al**
**GILL JENNINGS & EVERY 53-64 Chancery**
**Lane**
**London WC2A 1HN(GB)**

(54) **Filter assembly.**

(57) This invention consists of a novel filter combination which is disposed and adapted to be placed within a centrifugal pump between the impeller (7) and the mechanical seal (8) or packing (11) thereof, for the purpose of protecting the mechanical seal or packing therein from the contaminants in the liquid being pumped by the centrifugal pump. The device consists of a plurality of annular rings (1,2), each having vents (3-5) around the circumferences thereof. The rings (1,2) are designed to utilise the angular motion of the fluid and the forces on the contaminants induced by the rotation of the impeller (7), shaft (9) and seal (8) of the centrifugal pump, to remove contaminants from the fluids entering the area of the mechanical seal and thus prolong the use-life of the seal. This invention may be used in any adaptable existing centrifugal or other pumps, as a retro-fit.

FIG.3

# FILTER ASSEMBLY

This invention relates to a filter for protecting the seal, packing or bearings of rotary devices such as centrifugal pumps, blowers and compressors and other rotating equipment.

In the past, filtration, cooling systems, and flushing systems have utilised various forms of pumping devices which rotate within the pump housing, or a special housing, to direct the flow of the fluid around the seal. Generally these systems do not remove contaminants such as grit, but only re-circulate fluids for cooling and lubrication.

The existing technology, utilises either special pumping ring-seals or special housings, which cannot be easily retro-fitted into existing production pumps.

The prior art does not solve the problem which the present invention is devised to solve. For example, US-A-4,128,362 would draw contaminants into the seal area and would require a specially designed pump. US-A-3,999,882 does not filter contaminants from the liquid and utilises specially designed mechanical seals to develop pumping action. US-A-4,386,780 describes a system for removing contaminants from the liquid in a centrifugal pump, but requires that the pump be designed to accommodate a special housing in which complicated mechanical devices are housed and would make routine pump maintenance a difficult task. US-A-4,273,509 describes a cleaning unit which operates externally to the pump on the fluid pressure and flow developed by the pump.

According to the present invention a filter assembly for protecting the seal, packing or bearings of a rotary device comprises a first annular ring having a plurality of sets of vents located respectively adjacent the inner and outer circumferences thereof, the assembly being mounted in use adjacent the shaft of a rotary device such that circulation of fluid takes place through the vents in response to rotation of the shaft.

This filter utilises the cyclonic action created by rotation of the shaft to cause fluid movement which can be used to expel grit. The environment of the packing, mechanical seal, or bearings can be controlled in several ways:

1) For packing and seals a single or multiple stage filter system removes grit from the product entering the cavity.

2) For mechanical seals, air entrapped in the cavity on start-up is actively cycled out, thus preventing early seal burnout.

3) In higher temperature conditions, product vapours are actively withdrawn from the cavity.

4) In high temperature slurries, recirculation with active cooling can be used without suffering accumulation of grit in the stuffing box.

5) For mechanical seals fluid is recirculated axially through the stuffing box to remove frictional heat.

Preferably, the assembly further comprises at least one additional, annular ring, the or each additional ring having one, preferably only one, sequence of vents adjacent its outside circumference and a radially inner circumference adapted to surround loosely a shaft of the device, wherein the vents are disposed and adapted to direct fluid out of the seal cavity of the rotary device, thus projecting contaminants coming through the inside circumference of the first ring away from the shaft of the rotary device.

The assembly may be fitted between the impeller and the mechanical seal or packing of a pump. Its purpose is to protect the mechanical seal or packing from contaminants in the liquid being pumped.

The assembly consists of one or more annular rings with vents located near or beyond the inside circumference of the rings and near the outside circumference of the rings. These rings are designed to utilise the angular motion of the fluid and forces on the contaminants induced by the rotation of the impeller, shaft, and seal, remove contaminants from the fluid entering the area of the mechanical seal, packing, or bearings.

In some examples, the assembly may be easily retro-fitted into existing centrifugal pumps, turbines and other fluid-flow machines. The assembly occupies very little axial space and does not affect normal maintenance procedures. The present invention can be used to protect any make of mechanical seal or packing from contaminants in the fluid.

This invention further provides a re-circulating filter in the housing of the pump, or other fluid machine and provides clean, cooling, lubricating fluid to the mechanical seal or packing.

Some examples of centrifugal pumps incorporating filter assemblies according to the invention will now be described with reference to the accompanying drawings, in which:

Figure 1 illustrates a lateral cross-sectional view of an example of a first annular ring;

Figure 2 illustrates a horizontal cross-sectional view of the first annular ring and also sections taken on the lines A-A and B-B in Figure 1;

Figure 3 illustrates a horizontal cross-sectional view of the Figure 1 ring in operation with a two ring filter assembly within a pump having a mechanical seal; and,

Figure 4 illustrates a cylindrical pump using a standard form of packing and a second example of a filter assembly utilising a single ring only.

In the drawings, the reference number 1 indicates a circular hollow unit closed at the rear thereof and having vents 3 and 4 in an annular part. This unit 1 is adapted to receive and hold an annular ring 2, having a further series of vents 5 adjacent the radially outer circumference of the ring 2.

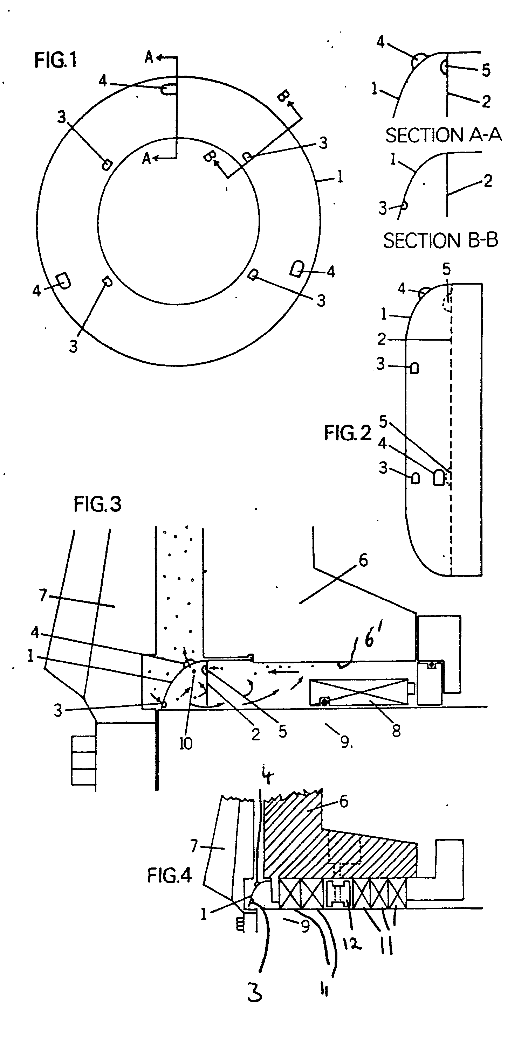

Figure 3 illustrates a pump housing 6 having a cylindrical cavity or stuffing box 6' within which is rotatably mounted a shaft 9. An impeller 7 is coupled to the shaft 9. A mechanical seal 8 seals the shaft 9 within the cavity 6'. Contaminants 10 are shown inside the pump.

The mode of use and operation of this invention is as follows:

In Figure 3, a mechanical seal 8 is located into the pump housing 6 between the impeller 7 and shaft 9. The shaft 9, impeller 7 and the mechanical seal 8 are rotated by the pump drive-motor, (not shown), and impart a rotational motion to the fluid throughout this area. The filter assembly defined by the unit 1 and ring 2 encourages and utilises this rotational or cyclonic motion, and further introduces controlled axial motion of the fluid.

The axially outer ring 1 incorporates two series of vents 3, 4 one series 3 on the inside circumference and one series 4 on the outside circumference. The vents 3 on the inside circumference, direct the rotating fluid flow along the axis of the shaft 9 toward the mechanical seal 8. The vents 4 on the outside circumference of the ring 1 direct the rotating flow towards the impeller 7. The inside ring 2 has one or more sets of vents adjacent its radially outer circumference for directing the rotating flow toward the vents 4 in the outside circumference of the outside ring 1. A small gap is left between ring 2 and the shaft 9. The vents are so sized that the vent series 4 is the largest, and vent series 3 is the smallest. This ensures velocity increase of fluid entering vents 3. Contaminants 10 thus accelerated in this rotational fluid, will contact ring 2 and be ejected through vent 4. The cleaner fluid will pass under ring 2 and enter the area of the mechanical seal 8, or the packing. Any contaminants entering under ring 2, will be centrifuged to the outside circumference of the seal cavity and will be ejected by the outflow through the vents 5.

Figure 4 illustrates a centrifugal pump similar to Figure 3 but the mechanical seal 8 is replaced by packing rings 11 positioned on either side of a lantern ring 12 for introducing cooling and lubrication fluid.

In these examples the filter assembly may be retro-fitted to the pump but in other cases it may be formed partly or wholly integrally with the pump.

Many designs for the vents are possible, and along with the spacing between the rings, can be sized to accommodate the type of the particulate or pumpage. The vents perform their function without unduly accelerating the grit, since excess velocity results in a high wear condition. In some applications, the relative shape and size of the vents can assist in controlling the pressure in the seal cavity.

## Claims

1. A filter assembly for protecting the seal, packing or bearings of a rotary device, the filter assembly comprising a first annular ring (1) having a plurality of sets of vents (3,4) located respectively adjacent the inner and outer circumferences thereof, the assembly being mounted in use adjacent the shaft (9) of a rotary device such that circulation of fluid takes place through the vents in response to rotation of the shaft.

2. An assembly according to claim 1, further comprising at least one additional, annular ring (2), the or each additional ring having one sequence of vents (5) adjacent its outside circumference and a radially inner circumference adapted to surround loosely a shaft (9) of the device, wherein the vents (3,4,5) are disposed and adapted to direct fluid out of the seal cavity of the rotary device, thus projecting contaminants coming through the inside circumference of the first ring (1) away from the shaft (9) of the rotary device.

3. An assembly according to claim 1 or claim 2, wherein the vents 3 adjacent the inner circumference of the first ring have the smallest cross-sectional area of all vents in the assembly and the vents (4) adjacent the outer circumference of the first ring have the largest cross-sectional area of all vents in the assembly.

4. A rotary device having a shaft (9) rotatably mounted in a cavity of a housing (6); sealing means for sealing the shaft (9) to the cavity; and a filter assembly according to any of claims 1 to 3, mounted to the housing (6) so as to close the cavity and with the or each ring (3-5) surrounding the shaft (9).

5. A device according to claim 4, wherein the shaft (9) is coupled to an impeller (7).

6. A device according to claim 4 or claim 5, wherein the filter assembly can be retro-fitted to the housing.

EP 0 328 800 A1

FIG.1

SECTION A-A

SECTION B-B

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | WORLD PATENT ABSTRACTS, section Q, week 8813, 4th February 1988, class Q 56, no. 88-063995, Derwent Publications Ltd, London, GB; & AU-A-076 202 (DUNFORD) 04-02-1988 * Abstract * | 1-6 | F 04 D 29/10<br>F 04 D 7/04 |
| A,D | US-A-4 386 780 (DERNEDDE) | | |
| A | EP-A-0 026 823 (FORD) | | |
| A | US-A-3 881 840 (BUNJES) | | |
| | | | **TECHNICAL FIELDS SEARCHED (Int. Cl.4)**<br><br>F 04 D<br>F 16 J<br>B 01 D |

The present search report has been drawn up for all claims

| Place of search | Date of completion of the search | Examiner |
|---|---|---|
| THE HAGUE | 11-10-1988 | DIMITROULAS P. |

EPO FORM 1503 03.82 (P0401)